# EUROPEAN PATENT APPLICATION

(11) **EP 1 460 570 A1**
(43) Date of publication of application: **22.09.2004**
(21) Application number: 02806056.4
(22) Date of filing: 08.10.2002
(51) Int. Cl.: G06F 17/60

(54) **WRITER, READER, AND EXAMINING METHOD**

(30) Priority: 28.12.2001 JP 2001399578
(71) Applicant: ALPS ELECTRIC CO., LTD., Tokyo 145-8501 (JP)
(72) Inventor: UMEHARA, Junichi c/o Alps Electric Co., Ltd., Ota-ku, Tokyo 145-8501 (JP); MIURA, Toshiyuki c/o Open Interface, Inc., Yokohama-shi, Kanagawa 222-0033 (JP)
(74) Representative: Klunker . Schmitt-Nilson . Hirsch
(86) International application number: PCT/JP2002/010443
(87) International publication number: WO 2003/058520

(57) **Abstract**

To provide an examining method capable of expediting customs clearance procedures including authenticity verification of brand-name products to thereby reduce the labor cost and capable of achieving paperless and low-cost procedures. A writing apparatus of a company manufacturing or selling brand-name products is used to send a company code, etc., encoded using an encoding key to an ID tag assigned to brand-name products. The ID tag stores the encoded company code, etc. An examining apparatus of an official who is responsible for examining the authenticity of the brand-name products receives the information sent from the ID tag, and decodes the received information using a decoding key. The decoded data and a pre-stored company code are compared to determine whether or not a match is found, and a determination result is output. When it is determined that the brand-name products are authentic and when an export license is granted, an employee or the like of a shipping company encodes the information described in a B/L and store the encoded information in the ID tag. The B/L information is read from the ID tag, if necessary, and is decoded using a decoding key.

## Description

### Technical Field

The present invention relates to a writing apparatus, a reading apparatus, and an examining method capable of verifying the authenticity of brand-name products in customs clearance procedures and capable of achieving paperless and quick customs clearance.

### Background Art

The current Customs Laws define that any exporter or importer should declare cargo to be exported or imported to customs or the like and should obtain an export/import license. This is called customs clearance. The cargo that clears customs can then be exported/imported.

In customs clearance at an airport or a sea port where cargo is unloaded, customs officials inspect the conformity between the cargo to be exported or imported and the particulars declared in advance, and determine whether or not export or import of the cargo is permitted based on an inspection. In this inspection, if this cargo is cargo required for approval, admission, etc., under other laws such as the Food Sanitation Law, it is determined whether or not the cargo has undergone the due procedures. In the inspection, it is also determined whether or not exportation or importation of the cargo is regulated by the Customs Law or other laws.

Products for which exportation/importation is considered illegal are counterfeit brand-name products. Counterfeit brand-name products are products counterfeited with unauthorized trademarks, design, marks, or the like. Exportation or importation of such counterfeit brand-name products is also prohibited in customs clearance procedures.

In order to determine whether or not cargo to be exported or imported is counterfeit brand-name products, a customs official or the like visually checks the cargo for authenticity. Therefore, the authenticity of brand-name products is checked for based on the knowledge, experience, etc., of the customs official. In some cases, counterfeit brand-name products can mistakenly be considered to be authentic, and can be permitted to be exported or imported. Moreover, authenticity verification carried out by humans requires a long time and increases the cost.

In a case where cargo is to be exported or imported by shipment, a Bill of Lading (hereinafter referred to as "B/L") is required. When a customs official grants a license in the export customs clearance, the cargo is loaded into a container, and the container is sealed with a seal. This container is then loaded on a vessel, and is transported by the vessel to the destination, i.e., a port of discharge. The B/L has a B/L number for uniquely identifying the B/L, the name of a shipping company that takes charge of the transportation, the quantity of cargo, etc. The B/L further has a container number of the container into which the cargo is loaded, a seal number of the seal with which the container is sealed, etc. In the import customs clearance, a customs official compares the seal number described in the B/L with the seal number of the seal with which the container is sealed to match the cargo in the container to the B/L, and then performs examinations. In the customs clearance procedures, therefore, multiple checks are performed based on the information described on paper documents, etc., to conduct necessary operations, which is time-consuming and costly.

### Disclosure of Invention

The present invention has been made in view of such a background, and it is an object of the present invention to provide a writing apparatus, a reading apparatus, and an examining method capable of expediting customs clearance procedures including authenticity verification of brand-name products to thereby reduce the labor cost and capable of achieving paperless and low-cost procedures.

The present invention has been made in order to achieve the object described above, and the present invention provides a writing apparatus that writes information for verifying the authenticity of a product assigned with an ID tag capable of contactless data writing and reading in a customs clearance procedure. The writing apparatus includes a writing unit that writes a company code of a company manufacturing or selling the product to the ID tag.

In the present invention, the writing apparatus may further include an encoding unit that encodes the company code using an encoding key for data encoding, and the writing unit may write the encoded company code to the ID tag.

Furthermore, the present invention provides a writing apparatus that writes information to an ID tag assigned to a product in a customs clearance procedure, the ID tag being capable of contactless data writing and reading. The writing apparatus includes a writing unit that writes a declaration number for uniquely identifying a declaration required for the customs clearance procedure to the ID tag.

In the present invention, the writing unit of the writing apparatus may further write a portion of or the entirety of information described in the declaration to the ID tag.

In the present invention, the writing apparatus may further include an encoding unit that encodes a portion of or the entirety of a company code of a company manufacturing or selling the product, the declaration number, and a portion of or the entirety of information described in the declaration using an encoding key for data encoding to produce encoded information, and the writing unit may write the encoded information to the ID tag.

Furthermore, the present invention provides a reading apparatus that reads information contained in an ID tag assigned to a product in a customs clearance procedure, the ID tag being capable of contactless data writing and reading. The reading apparatus includes a storing unit that stores in advance a company code of a company manufacturing or selling the product, a determining unit that compares the information read from the ID tag with the company code stored in the storing unit to determine whether or not a match is found, and an outputting unit that outputs a determination result.

In the present invention, the storing unit may further store a decoding key corresponding to an encoding key by which data stored in the ID tag is encoded. The reading apparatus may further include a decoding unit that decodes the information read from the ID tag using the decoding key to produce decoded information. The determining unit may compare the decoded information with the company code stored in the storing unit to determine whether or not a match is found.

In the present invention, the determining unit may compare a portion of the decoded information with the company code stored in the storing unit to determine whether or not a match is found, and the outputting unit may output the portion of the decoded information other than the portion compared by the determining unit.

Furthermore, the present invention provides an examining method for verifying the authenticity of a product assigned with an electronic device capable of contactless data writing and reading in a customs clearance procedure. The examining method includes a step in which a writing apparatus of a company manufacturing or selling the product writes a company code of the company manufacturing or selling the product to the electronic device, a step in which an examining apparatus for verifying the authenticity of the product stores the company code of the company in advance, a step in which the examining apparatus compares the information read from the electronic device with the stored company code to determine whether or not a match is found, and a step in which the examining apparatus outputs a determination result.

According to the writing apparatus, reading apparatus, and examining method of the present invention, the authenticity of brand-name products in customs clearance procedures can be verified without human labor, thus avoiding the occurrence of artificial errors in the authenticity verification while achieving quick customs clearance and low labor cost. Moreover, a portion of or the entirety of information described in a B/L can be directly attached to cargo to be exported or imported, thus achieving quick and paperless customs clearance procedures and reducing the cost. Moreover, since information attached to cargo is encoded, the information can be read by only a specific apparatus or the like having a decoding key corresponding to an encoding key, thus preventing information leakage to a malicious third party.

### Brief Description of the Drawings

Fig. 1 is a diagram for showing the overview of an embodiment of the present invention.
Fig. 2 is a diagram showing the configuration of an ID. tag according to this embodiment.
Fig. 3 is a diagram showing the configuration of a writing apparatus according to this embodiment.
Fig. 4 is a diagram showing the configuration of an examining apparatus.according to this embodiment.
Fig. 5 is a chart showing the operation in this embodiment.
Fig. 6 is an illustration of example information stored in a storage unit of a writing apparatus of a company in this embodiment.
Fig. 7 is an illustration of example information stored in a storage unit of an examining apparatus that is used for the export customs clearance in this embodiment.
Fig. 8 is an illustration of example information stored in a storage unit of a writing apparatus that is used for the export customs clearance in this embodiment.
Fig. 9 is an illustration of example information stored in a storage unit of an examining apparatus that is used for the import customs clearance in this embodiment.

### Best Mode for Carrying Out the Invention

An embodiment of the present invention will now be described with reference to the drawings.

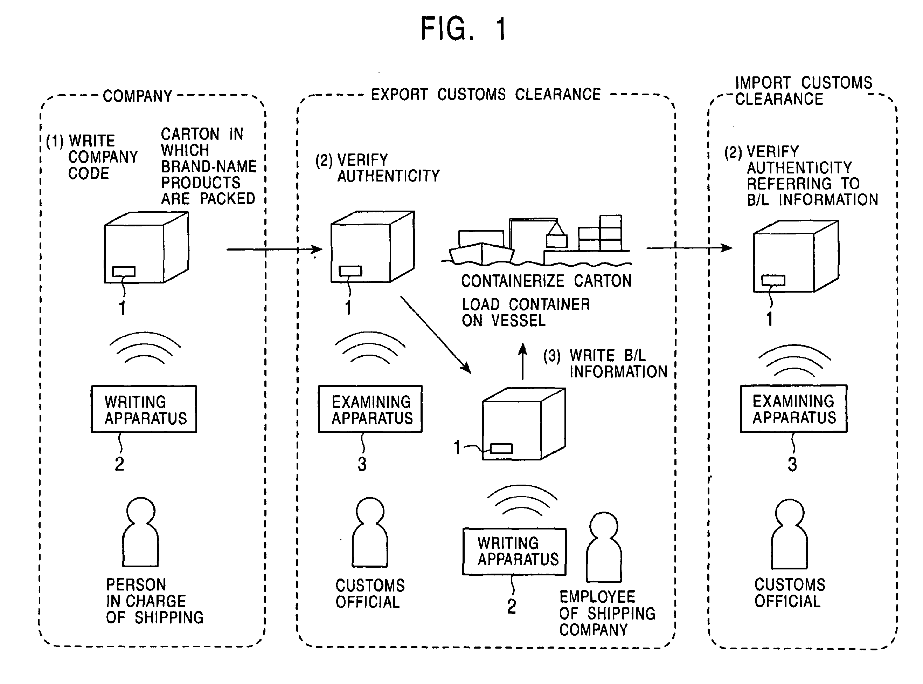

Fig. 1 is a diagram for showing the overview of this embodiment in which RFID (Radio Frequency Identification) technology is employed. As shown in Fig. 1, in this embodiment, a company manufacturing or selling brand-name products assigns an ID (Identification) tag containing a company code for uniquely identifying the company to a carton in which the products are packed or to each product itself. In the customs clearance, the ID tag is read, and is compared to a pre-stored company code to verify the authenticity of the brand-name products. The information described in a B/L is stored in the ID tag, thus allowing for simplified customs clearance.

In Fig. 1, reference numeral 1 denotes an ID tag in which data is stored. In this example, the ID tag 1 is assigned to a carton in which brand-name products are packed. Reference numeral 2 denotes a writing apparatus having the function of writing data in the ID tag. Reference numeral 3 denotes an examining apparatus having the function of reading the data stored in the ID tag and verifying the authenticity of the brand-name products. For convenience of illustration, the writing apparatus 2 that is used in a company is also referred to as a writing apparatus 2a, the writing apparatus 2 and the examining apparatus 3 that are used for the export customs clearance are also referred to as a writing apparatus 2b and an examining apparatus 3b, respectively, and the examining apparatus 3 that is used for the import customs clearance is also referred to as an examining apparatus 3c. In the following description, components constituting the respective apparatuses are given reference symbols a to c to distinguish the components of the apparatuses.

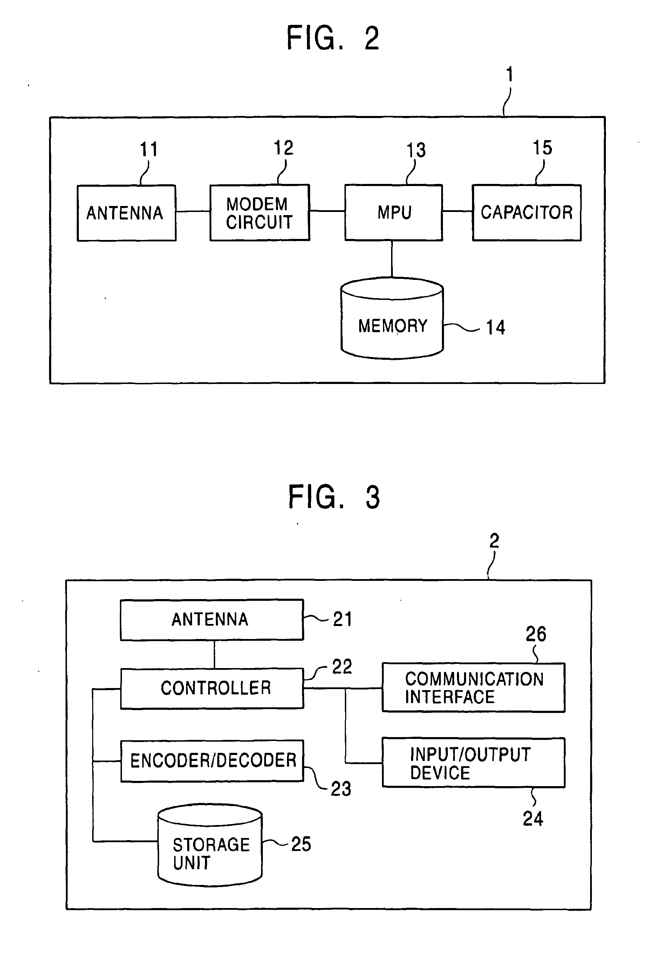

The configuration of the ID tag 1 will be described with reference to Fig. 2. In Fig. 2, reference numeral 11 denotes an antenna. Reference numeral 12 denotes a modem circuit. Reference numeral 13 denotes an MPU (Micro Processing Unit). Reference numeral 14 denotes a memory. Reference numeral 15 denotes a capacitor. In the ID tag 1, a radio wave (signal) transmitted from the writing apparatus 2 or the examining apparatus 3 is received by the antenna 11, and the received analog signal is converted into a digital signal by the modem circuit 12. The MPU 13 performs processing based on various data stored in the memory 14. The power for driving the MPU 13 of the ID tag 1 may employ, for example, a current generated by a magnetic field that is produced when the antenna 11 serving as a coil receives the radio wave transmitted from the writing apparatus 2 or the examining apparatus 3, or power pre-stored in the capacitor 15. In addition to the configuration shown in Fig. 2, a rectifier, a smoothing circuit, etc., may further be provided.

The ID tag configuration is not limited to the configuration shown in Fig. 2. As used herein, the term ID tag means an electronic device including at least an antenna and an operating processor such as an MPU or a CPU (Central Processing Unit) and capable of contactless data writing and reading.

The configuration of the writing apparatus 2 will be described with reference to Fig. 3. In Fig. 3, reference numeral 21 denotes an antenna for communicating with the ID tag 1. Reference numeral 22 denotes a controller for controlling the writing apparatus 2. Reference numeral 23 denotes an encoder/decoder that encodes or decodes data using a key stored in a storage unit 25 or the like. In this example, encoding and decoding are performed using a public key coding scheme. Reference numeral 24 denotes an input/output device, including a liquid crystal display screen, a speaker, a ten-key pad, a keyboard, and so on. Reference numeral 25 denotes a storage unit. Reference numeral 26 denotes a communication interface for communicating with other systems (not shown) via a line or wirelessly.

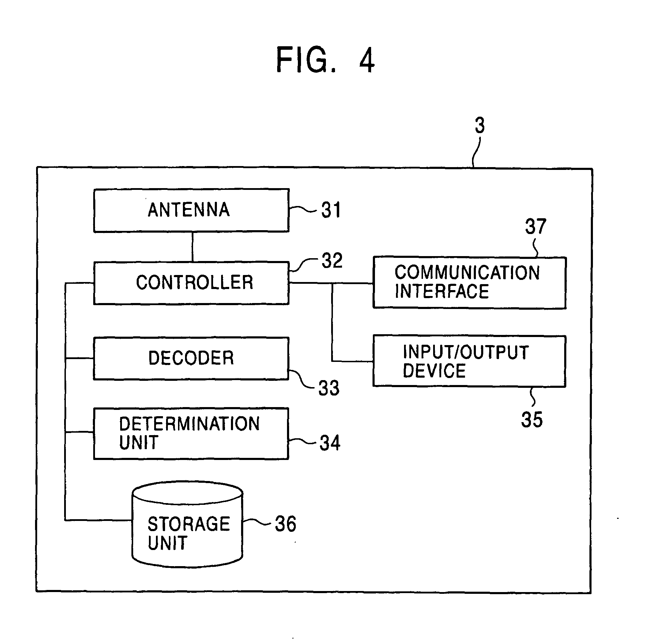

The configuration of the examining apparatus 3 will be described with reference to Fig. 4. In Fig. 4, reference numeral 31 denotes an antenna for communicating with the ID tag 1. Reference numeral 32 denotes a controller for controlling the examining apparatus 3. Reference numeral 33 denotes a decoder for decoding data using a key stored in a storage unit 36 or the like. In this example, encoding and decoding are performed using a public key coding scheme. Reference numeral 34 denotes a determination unit that determines whether brand-name products packed in a carton assigned with the ID tag 1 are authentic. Reference numeral 35 denotes an input/output device, including a liquid crystal display screen, a speaker, a ten-key, a keyboard, and so on. Reference numeral 36 denotes a storage unit. Reference numeral 37 denotes a communication interface for communicating with other systems (not shown) via a line or wirelessly.

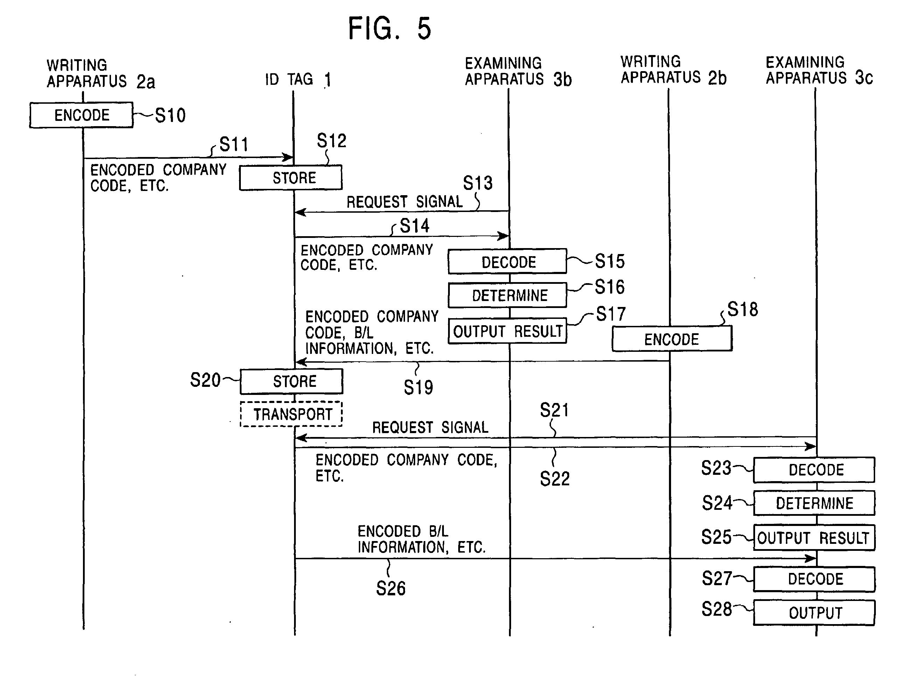

The operation will now be described with reference to Fig. 5.

In a company manufacturing or selling brand-name products, a person in charge of shipping packs the products, such as bags, jewelry, and watches, into a carton. This carton is assigned in advance with the ID tag 1. The person in charge of shipping in the company uses the input/output device 24a of the writing apparatus 2a to specify the type of products packed in the carton, and instructs writing to the ID tag 1.

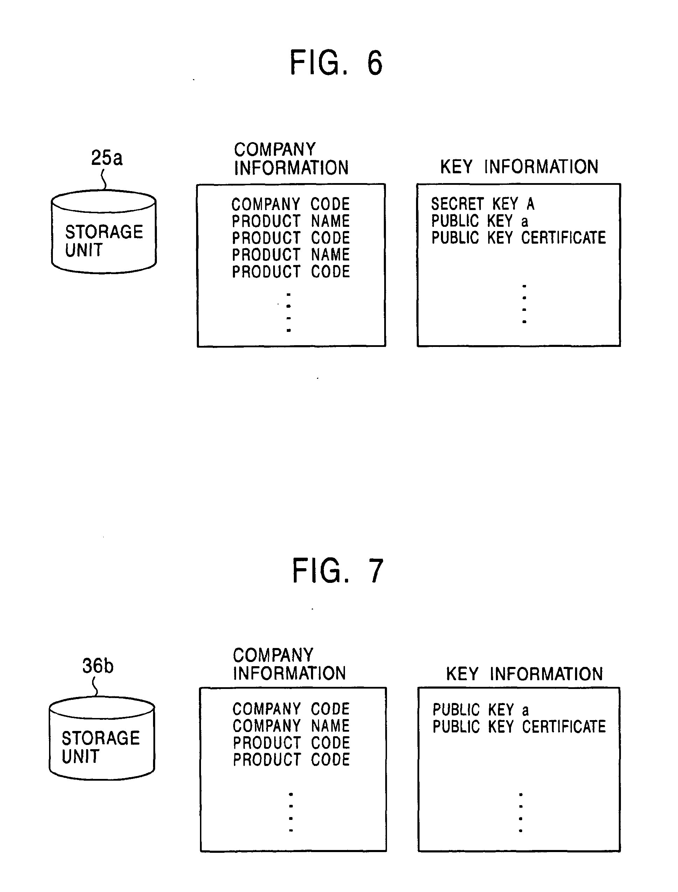

As shown in Fig. 6, the storage unit 25a of the writing apparatus 2a stores company information, such as a company code, the product name of a product that is manufactured or sold by the company, and a product code for uniquely identifying the product, and key information, such as a secret key A, a public key a corresponding to this secret key, and a public key certificate for the public key a. The company code is data for uniquely identifying a company that holds the intellectual property rights of the brand-name products. The product code is data for uniquely identifying the type of product manufactured or sold by the company.

The controller 22a of the writing apparatus 2a sends an encoding instruction to the encoder/decoder 23a. The encoder/decoder 23a encodes the company code stored in the storage unit 25a using the secret key A stored in the storage unit 25a (step S10 in Fig. 5). The encoder/decoder 23a also encodes the product code using the secret key A stored in the storage unit 25a. The encoding procedure is not limited to this procedure, and, for example, data in which a hash value of the product code obtained in the procedure described in the public key certificate for the public key a is added to a hash value of the company code obtained in the procedure described in the public key certificate for the public key a may be encoded using the secret key A.

The encoder/decoder 23a transmits the encoded data, i.e., the encoded company code and product code, to the controller 22a.

The controller 22a transmits the encoded data to the ID tag 1 via the antenna 21 (step S11 in Fig. 5). In this case, the ID tag 1 or the writing apparatus 2a may use pseudo-random numbers or the like to generate a one-time password available for only one-time use in order to further perform an authentication procedure for determining whether or not the ID tag 1 is authorized or whether or not the writing apparatus 2a is authorized.

The ID tag 1 receives the encoded data, and stores it in the memory 14 (step S12 in Fig. 5).

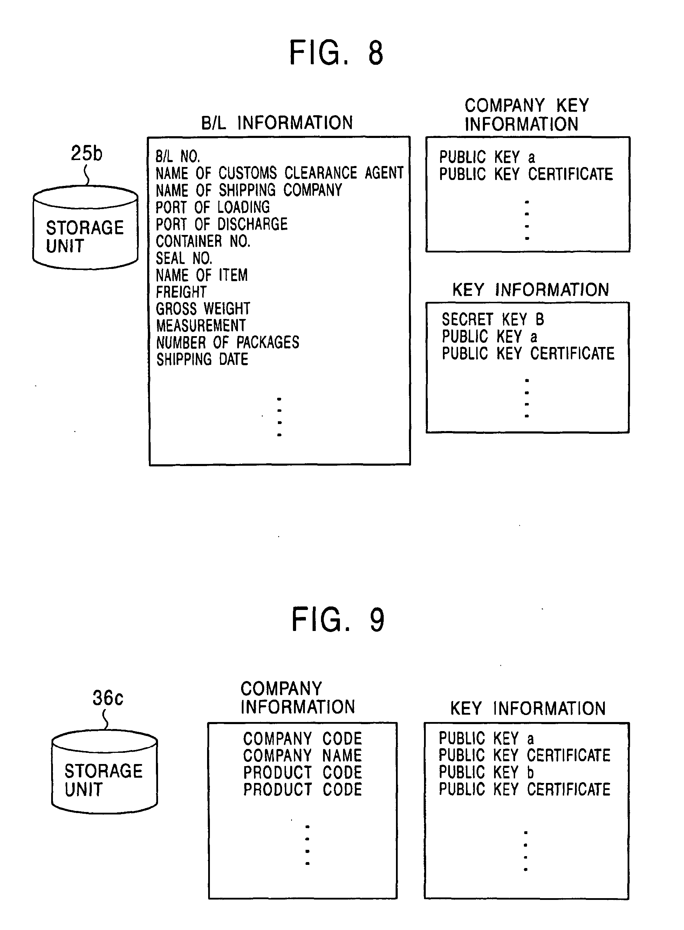

When the encoded data, i.e., the encoded company code and product code, is stored in the ID tag 1, the carton in which the products are packed is shipped, and is transported to a place, such as a harbor or an off-deck, where the export customs clearance can be performed. A customs official or the like who is responsible for examinations in the export customs clearance uses the examining apparatus 3b to verify the authenticity of the brand-name products. As shown in Fig. 7, the storage unit 36b of the examining apparatus 3b stores company information, such as a company code, a company name, and a product code, and key information, such as a public key a and a public key certificate for the public key a. Such information is acquired in advance from a customs clearance system or the like (not shown) via the communication interface 37b or the like. The customs official specifies the company that exports the products using the input/output device 35b of the examining apparatus 3b, or specifies the company that manufactures or sells the products from the information or the like received from a customs clearance system or the like (not shown) via the communication interface 37b, and gives an instruction to test for matching.

The controller 32b of the examining apparatus 3b transmits a signal for requesting transmission of the encoded data to the ID tag 1 via the antenna 31b (step S13 in Fig. 5). Upon receiving the request signal, the ID tag 1 reads the encoded data, i.e., the encoded company code and product code, from the memory 14, and transmits it to the examining apparatus 3b (step S14 in Fig. 5). In this case, the ID tag 1 or the examining apparatus 3b may use pseudo-random numbers or the like to generate a one-time password available for only one-time use in order to further perform an authentication procedure for determining whether or not the ID tag 1 is authorized or whether or not the examining apparatus 3b is authorized.

The controller 32b of the examining apparatus 3b sends a decoding instruction to the decoder 33b. The decoder 33b reads the public key of the company specified by the official from the storage unit 36b, and decodes the encoded data using the read public key (step S15 in Fig. 5). In this example, decoded data in which the encoded data is decoded using the public key a is obtained.

The controller 32b sends to the determination unit 34b an instruction to test for matching. The determination unit 34b reads the product code and the company code of the company specified by the customs official from the storage unit 36. Then, the decoded data obtained by the decoder 33b and the read company code and product code are compared to determine whether or not a match is found (step S16 in Fig. 5). Then, a determination result is transmitted to the controller 32b.

The controller 32b causes the input/output device 35b to output a result based on the determination result of the determination unit 34b (step S17 in Fig. 5). In this case, only information indicating whether or not the products in the carton are authentic is output to the input/output device 35b.

When the customs official determines that the products in the carton are authentic, other processing in the customs clearance procedures is performed, and the carton is loaded into a container. The container into which the carton whose cargo has been inspected by the customs official, etc., are loaded is sealed with a seal. The seal has a seal number for uniquely identifying the seal.

An employee or the like of the shipping company transporting this container uses the input/output device 24b of the writing apparatus 2b to instruct addition of information to the ID tag 1 before the carton assigned with the ID tag 1 is containerized. Example information stored in the storage unit 25b of the writing apparatus 2b is shown in Fig. 8. The storage unit 25b stores B/L information, including a customs clearance agent that deals with the customs clearance procedures, a B/L number for uniquely identifying the B/L, the name of a shipping company handling carriage of the container, a port of loading from which the vessel on which the container is loaded departs, a port of discharge, a container number for uniquely identifying the container, a seal number of the seal affixed to the container, the name of items contained in the cargo packed in the carton for carriage, the freight, the gross weight, the measurement, the number of packages, and the shipping date, and so on. The B/L information may be acquired by receiving it from a customs clearance system or the like (not shown) via the communication interface 26b, or may be acquired by inputting it by the employee or the like using the input/output device 24b. The storage unit 25b also pre-stores company key information, such as the public key a of the company and the public key certificate for this public key, key information, such as a secret key B of the shipping company, a public key b corresponding to the secret key B, and a public key certificate for the public key b, and so on.

The controller 22b of the writing apparatus 2b transmits a signal for requesting transmission of the encoded data to the ID tag 1 via the antenna 21b. Upon receiving the request signal, the ID tag 1 reads the encoded data, i.e., the encoded company code and product code, from the memory 14, and transmits it to the writing apparatus 2b.

The controller 22b of the writing apparatus 2b sends a decoding instruction to the encoder/decoder 23b. The encoder/decoder 23b determines the company name from the storage unit 25b, reads the public key a of this company from the storage unit 36b, and decodes the encoded data using the read public key a to obtain the company code and the product code.

Then, the controller 22b sends an encoding instruction to the encoder/decoder 23b. The encoder/decoder 22b encodes data, in which the obtained product code and the B/L information stored in the storage unit 25b are added to the obtained company code, using the secret key B to produce encoded data. The controller 22b transmits the produced encoded data to the ID tag 1 (step S19 in Fig. 5). In this case, the ID tag 1 or the writing apparatus 2b may use pseudo-random numbers or the like to generate a one-time password available for only one-time use in order to further perform an authentication procedure for determining whether or not the ID tag 1 is authorized or whether or not the writing apparatus 2b is authorized.

The ID tag 1 stores the received encoded data in the memory 14 (step S20 in Fig. 5). The encoded data is appended so that the information stored by the company cannot be deleted.

After other procedures, the vessel on which the container that accommodates cargo including the carton is loaded departs for the port of discharge, which is the place of delivery of the container. The shipping company or the customs clearance agent transmits the information described in the B/L to a computer or the like of a cargo recipient via a communication network such as the Internet.

When the container is unloaded from the vessel to the port, customs clearance is required until the cargo, such as the carton in the container, is delivered to a cargo recipient. A customs official or the like who is responsible for examinations in the customs clearance procedures examines the authenticity of the products using the examining apparatus 3c in a predetermined place such as a bonded area or in the vessel. Example information stored in the storage unit 36c of the examining apparatus 3c is shown in Fig. 9. The storage unit 36c stores company information, including a company code, a company name, a product code, and so on, and key information, including a public key a, a public key certificate for the public key a, a public key b, a public key certificate for the public key b, and so on. The company information and the key information may be information transmitted from a customs clearance system or the like (not shown) via the communication interface 37c, or may be information acquired by inputting it using the input/output device 35c by the official. The customs official specifies the company that exported the products using the input/output device 35c of the examining apparatus 3c, or specifies the company from the information transmitted from a customs clearance system or the like (not shown) via the communication interface 37c, and gives an instruction to test for matching.

The controller 32c of the examining apparatus 3c transmits a signal for requesting transmission of the encoded data, i.e., the encoded company code and product code, to the ID tag 1 via the antenna 31c (step S21 in Fig. 5). Upon. receiving the request signal, the ID tag 1 reads the encoded data, i.e., the encoded company code and product code, from the memory 14, and transmits it to the examining apparatus 3c (step S22 in Fig. 5). In this case, the ID tag 1 or the examining apparatus 3c may use pseudo-random numbers or the like to generate a one-time password available for only one-time use in order to further perform an authentication procedure for determining whether or not the ID tag 1 is authorized or whether or not the examining apparatus 3c is authorized.

The controller 32c of the examining apparatus 3c sends a decoding instruction to the decoder 33c. The decoder 33c reads the public key of the specified company from the storage unit 36c, and decodes the encoded data using the read public key (step S23 in Fig. 5). In this example, decoded data in which the encoded data is decoded using the public key a is obtained.

The controller 32c sends to the determination unit 34c an instruction to test for matching. The determination unit 34c reads the company code of the specified company and the product code from the storage unit 36c. Then, the decoded data obtained by the decoder 33c and the company code and product code are compared to determine whether or not a match is found (step S24 in Fig. 5). Then, a determination result is transmitted to the controller 32c.

The controller 32c causes the input/output device 35c to output a result based on the determination result of the determination unit 34c (step S25 in Fig. 5). In this case, only information indicating whether or not the products in the carton are authentic is output to the input/output device 35c.

When the customs official wishes to refer to the B/L information, the input/output device 35c of the examining apparatus 3c is used to specify the shipping company that transported the brand-name products and to instruct outputting of the B/L information. The controller 32c of the examining apparatus 3c transmits a signal for requesting transmission of the encoded data of the company code, the product code, and the B/L information to the ID tag 1 via the antenna 31c. Upon receiving the request signal, the ID tag 1 reads the encoded data, i.e., the encoded company code, product code, and B/L information, from the memory 14, and transmits it to the examining apparatus 3c (step S26 in Fig. 5).

The controller 32c of the examining apparatus 3c sends a decoding instruction to the decoder 33c. The decoder 33c reads the public key of the shipping company specified by the customs official from the storage unit 36c, and decodes the encoded data using the read public key (step S27 in Fig. 5). In this example, decoded data in which the encoded data is decoded using the public key b is obtained.

The controller 32c causes the input/output device 35c to output the obtained decoded data (step S28 in Fig. 5).

The customs official determines whether or not import of the products is permitted based on the output authenticity examination result, other examination results, particulars of the import declaration, etc.

When an import license is granted from customs or the like, cargo delivery to the recipient is possible. The shipping company sends a cargo arrival notice to the recipient by telephone, e-mail, facsimile, or the like. The recipient prints the B/L information received by a personal computer or the like using a printer or the like, and mails the printout. Alternatively, the recipient sends the B/L information to the shipping company via a communication network such as the Internet. The shipping company passes a delivery order in exchange for the B/L information sent from the recipient. The recipient receives the transported carton in exchange for delivery of the delivery order to the captain or the like of the vessel on which the cargo was transported.

In the embodiment described above, an ID tag is assigned to a carton in which products are packed; however, the present invention is not limited to this form. For example, an ID tag may be embedded in any packing material with which products are packed, other than a carton, or each product itself.

In the embodiment described above, the authenticity of brand-name products is verified. As used herein, the term brand-name products means products with a registered or unregistered trademark as industrial property rights, which are not necessarily manufactured by famous manufacturers.

In the embodiment described above, a company code and a product code are encoded; however, the present invention is not limited to this form. Moreover, in the embodiment described above, the combination of a company code, a product code, and B/L information is encoded; however, the present invention is not limited to this form. For example, data in which a hash value of a product code is added to a company code may be encoded, or a hash value of data in which a product code is added to a company code may be encoded. For example, B/L information and data in which a product code is added to a company code may be encoded. In summary, what data is encoded in which way is not limited in this embodiment, so far as it can be determined whether or not decoded data of encoded data conforms to a pre-stored company code, and so far as B/L information can be encoded. Only a company code may be encoded, or only a portion of B/L information may be encoded.

The writing apparatus need not store all B/L information in an ID tag, and may store only a B/L number or only a portion of the B/L information in an ID tag.

In the embodiment described above, B/L information is written to an ID tag by an employee or the like of a shipping company; however, the present invention is not limited to this form. For example, a portion of or the entirety of B/L information may be stored by an official who is responsible for customs clearance, or a portion of or the entirety of B/L information may be stored by a customs clearance agent that deals with the customs clearance procedures. Alternatively, a portion of B/L information may be stored in an ID tag before a customs official or the like verifies the authenticity.

The information described in a B/L is not limited to a customs clearance agent that deals with the customs clearance procedures, a B/L number for uniquely identifying the B/L, the name of a shipping company handling carriage of the container, a port of loading from which the vessel on which the container is loaded departs, a port of discharge', a container number for uniquely identifying the container, a seal number of the seal affixed to the container, the name of items contained in the cargo packed in the carton for carriage, the freight, the gross weight, the measurement, the number of packages, and the shipping date, but may include other information.

In the embodiment described above, the information described in a B/L, including a B/L number, is written to an ID tag; however, the written information is not limited to the information described in the B/L. The written information may include, for example, a number for uniquely identifying a document (declaration) required for customs clearance, such as an air waybill, an import declaration, an invoice, which is a document indicating the price, quantity, etc., of the cargo to be imported, and a certificate indicating that an export or import license is granted under other laws, or a portion of or the entirety of information described in such a document.

The storage unit 25, the storage unit 36, and the memory 14 are constituted by a hard disk device or a magneto-optical disk device, a non-volatile memory such as a Flash memory, a read-only storage medium such as a CD-ROM, a volatile memory such as a RAM (Random Access Memory), or a combination thereof.

The blocks shown in Figs. 2, 3, and 4 may be implemented by dedicated hardware. Alternatively, the blocks may be constituted by a memory and a CPU (central processing unit), and the functions thereof may be implemented by loading a program for implementing the functions of the blocks into a memory and executing the program.

A program for implementing the functions of the blocks shown in Figs. 2, 3, and 4 may be recorded in a computer-readable recording medium, and the program recorded in the recording medium may be read by a computer system and executed, thereby implementing the functions. As used herein, the term "computer system" includes an OS or hardware such as peripheral devices.

The term "computer system" also covers a homepage providing environment (or viewing environment) in a case where a WWW (World Wide Web) system is used.

The term "computer-readable recording medium" means a portable medium, such as a flexible disk, a magneto-optical disk, a ROM, or a CD-ROM, or a storage device such as a hard disk housed in the computer system. The term "computer-readable recording medium" also covers a storage unit that dynamically stores the program for a short period of time, such as a communication line in a case where the program is transmitted via a network such as the Internet or via a communication line such as a telephone line, and a storage unit that stores the program for a certain period of time, such as an internal volatile memory of the computer system serving as a server or a client in such a case. This program may implement a portion of the functions described above, or may implement the functions described above in combination of a program pre-recorded in the computer system.

While an embodiment of the present invention has been described in detail with reference to the drawings, the specific structure is not limited to the illustrated embodiment, and modifications or changes may be embraced without departing the scope of the invention.

### Industrial Applicability

According to the writing apparatus, reading apparatus, and examining method of the present invention, the authenticity of brand-name products in customs clearance procedures can be verified without human labor, thus avoiding the occurrence of artificial errors in the authenticity verification while achieving quick customs clearance and low labor cost. Moreover, a portion of or the entirety of information described in a B/L can be directly attached to cargo to be exported or imported, thus achieving quick and paperless customs clearance procedures and reducing the cost. Moreover, since information attached to cargo is encoded, the information can be read by only a specific apparatus or the like having a decoding key corresponding to an encoding key, thus preventing information leakage to a malicious third party.

## Claims

1. A writing apparatus that writes information for verifying the authenticity of a product assigned with an ID tag capable of contactless data writing and reading in a customs clearance procedure, said writing apparatus comprising:
a writing unit that writes a company code of a company manufacturing or selling the product to the ID tag.

2. A writing apparatus according to claim 1, further comprising an encoding unit that encodes the company code using an encoding key for data encoding,
wherein the writing unit writes the encoded company code to the ID tag.

3. A writing apparatus that writes information to an ID tag assigned to a product in a customs clearance procedure, the ID tag being capable of contactless data writing and reading, said writing apparatus comprising:
a writing unit that writes a declaration number for uniquely identifying a declaration required for the customs clearance procedure to the ID tag.

4. A writing apparatus according to claim 3, wherein the writing unit of the writing apparatus further writes a portion of or the entirety of information described in the declaration to the ID tag.

5. A writing apparatus according to claim 3, further comprising an encoding unit that encodes a portion of or the entirety of a company code of a company manufacturing or selling the product, the declaration number, a portion of or the entirety of the information described in the declaration using an encoding key for data encoding to produce encoded information,
wherein the writing unit writes the encoded information to the ID tag.

6. A reading apparatus that reads information in an ID tag assigned to a product in a customs clearance procedure, the ID tag being capable of contactless data writing and reading, said reading apparatus comprising:
a storing unit that stores in advance a company code of a company manufacturing or selling the product;
a determining unit that compares the information read from the ID tag with the company code stored in the storing unit to determine conformity; and
an outputting unit that outputs a determination result.

7. A reading apparatus according to claim 6, wherein the storing unit further stores a decoding key corresponding to an encoding key by which data stored in the ID tag is encoded,
the reading apparatus further comprises a decoding unit that codes the information read from the ID tag using the decoding key to produce decoded information, and
the determining unit compares the decoded information with the company code stored in the storing unit to determine conformity.

8. A reading apparatus according to claim 7, wherein the determining unit compares a portion of the decoded information with the company code stored in the storing unit to determine conformity, and
the outputting unit outputs the portion of the decoded information other than the portion compared by the determining unit.

9. An examining method for verifying the authenticity of a product assigned with an electronic device capable of contactless data writing and reading in a customs clearance procedure, said examining method comprising:
a step in which a writing apparatus of a company manufacturing or selling the product writes a company code of the company manufacturing or selling the product to the electronic device;
a step in which an examining apparatus for verifying the authenticity of the product stores the company code of the company in advance;
a step in which the examining apparatus compares the information read from the electronic device with the stored company code to determine conformity; and
a step in which the examining apparatus outputs a determination result.
